# EUROPEAN PATENT APPLICATION

(11) **EP 0 556 953 A1**
(43) Date of publication of application: **25.08.1993**
(21) Application number: 93300386.5
(22) Date of filing: 20.01.1993
(51) Int. Cl.: G03G 15/20

(54) **Rollers for image recorders, and methods of making such rollers**

(30) Priority: 20.01.1992 JP 7261/92
(71) Applicant: HITACHI, LTD., Chiyoda-ku, Tokyo 101 (JP); HITACHI KOKI CO., LTD., Chiyoda-ku, Tokyo 100 (JP)
(72) Inventor: Mitsuya, Teruaki, Naka-gun, Ibaraki 311-01 (JP); Seino, Minoru, Katsuta-shi, Ibaraki 312 (JP); Ishii, Kenji, Katsuta-shi, Ibaraki 312 (JP); Tamura, Kouichi, Hiratsuka-shi, Kanagawa 254 (JP)
(74) Representative: Stoner, Gerard Patrick

(57) **Abstract**

A roller (90) in an image recorder, such as a high-speed printer, has a thin surface layer (91) made from a ladder-structure polysiloxane resin having repeating units of the general formula:

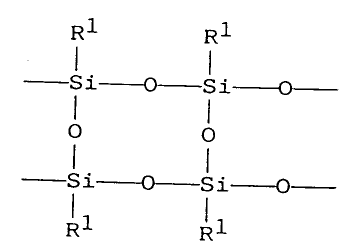

A mixture of phenyl and methyl groups is preferred for the side groups R¹. The surface layer (91) has toner release properties, so that fused image toner does not stick. It also withstands heat and wear.

## Description

This invention relates to image recorders of the type which use toner to produce a visible image. Such image recorders are used in, for example printers, facsimile machines and photocopying machines. In particular, the invention is concerned with rollers at a heating station in the recorder, where a toner image formed on a recording medium is heated to fuse it.

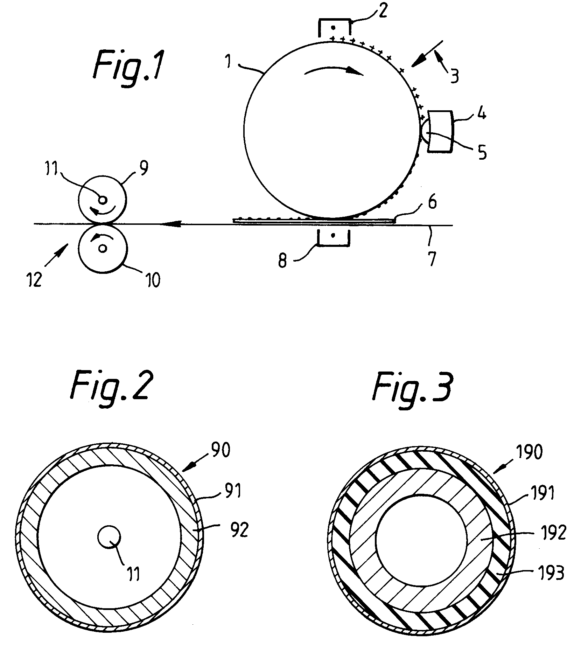

A conventional electrophotographic image-forming process is described with reference to Fig. 1. The surface of a photoconductive drum 1 is continuously charged electrostatically at a charging station 2. The image to be recorded is formed in electrostatic form on the surface of the drum 1, e.g. by a laser beam 3. A developer 4 applies particulate toner to the drum surface from a developing roll 5. The toner sticks only to the charged portions of the drum surface, corresponding to the image. The toner is then transferred to a recording medium 6, e.g. a sheet of paper, by an electrostatic transfer device 8. The recording medium 6 carrying the toner image passes along a recording medium path 7 to a heating station 12 where it passes through the nip of a pair of rollers 9, 10. The heating station heats the toner - typically by a heater 11 inside one or both of the rollers - to fuse the toner and thereby render the image permanent.

Should toner become stuck to the surface of a roller at the heating station, that toner will tend to be transferred back onto the recording body at some subsequent position, spoiling the quality of the image. This is called the offset phenomenon.

To prevent this as far as possible, any toner-contacting roller at the heating station is given a special surface to which toner does not tend to stick. Previously silicone rubber, fluoro rubber and fluoro resins have been used for this purpose. Most preferred are fluoro resins such as PFA (perfluoro alkoxy) resin and PTFE (polytetrafluorethylene) resin, since they have particularly good release (non-sticking) properties as regards the toner.

However, the requirement of toner release is only one of several serious technical demands on the roller surface.

In particular, in use the roller surface is continually contacting against fast-moving recording medium e.g. sheets of paper, and is subjected to scratching and abrasion by the surface and ends of such medium. The known fluororesin surface materials, which give the best release of the toner, are rather soft materials. Their resistance to such wear is relatively low. Typically, a heating station roller in a high-speed laser printer is worn out after processing about a million sheets. A fast printer might process this number of sheets in e.g. a month, so the roller is a part which frequently needs to be replaced.

Furthermore, being at the heating station, the roller surface is subjected to high temperatures. It must be able to maintain its non-stick properties and wear resistance at the high temperatures needed for efficient fusing of the toner. In practice, the known fluororesins can stand up to about 200°C under normal use conditions. It would be desirable to use higher temperatures, since higher temperatures would speed fusing and thereby speed the overall process. But, the known fluororesins cannot withstand higher temperatures without degradation of their properties.

Furthermore, when heat is applied through the roller surface from the interior of the roller, the surface material tends to hinder heat conduction. To minimise this effect, the toner release material is conventionally applied as a very thin surface layer on a more thermally conductive substrate material, usually an aluminum cylinder. Fluororesin layers are typically 20-100µm thick. Silicone rubber layers are difficult to form thinly; they may be 100-300µm, or even 1-2mm on color copier rollers. Making a thin uniform layer of such materials on a roller is a significant technical problem. It is not normally practical to wrap film around the roller, since a discontinuity arises where the edges of the film are joined. The conventional technique is to spray the melted or particulate material onto the roller substrate surface, creating a thick rough layer, and then machine this layer to the desired thin uniformity using a lathe cutter. A substantial proportion of the production cost for rollers arises from this laborious step.

From the above, it will be understood that the existing rollers have a number of problems, some of them interrelated. It is an object of the present invention to try to reduce or eliminate at least some of these problems.

As a result of extensive investigations, we have identified a new type of material for forming the outer surface of such a roller. Specifically, we have found that by using a polysiloxane resin having a ladder structure based on repeating units of the following type: 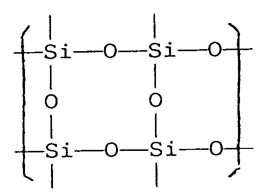
it is possible to create a roller surface which not only has good toner release, but also good wear resistance and ability to maintain its properties at high operational temperatures. Furthermore, we have found that it is possible to form such resins in situ on a roller substrate surface, from precursor polysiloxane which may be applied as a solution. By this means, the necessity for machining in roller manufacture may be reduced or eliminated.

In one specific aspect, the invention provides a toner heating station roller for an image recorder, having an outer surface formed of polysiloxane resin having a ladder structure with repeating units of the formula 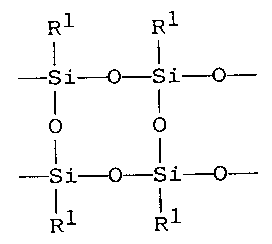
in which the groups R¹ are side groups which may vary independently i.e. be the same as or different from each other.

The side groups R¹ may be selected to provide various properties of toner release and heat/wear resistance. Preferably, the side groups R¹ are selected from hydrogen, phenyl and C₁₋₁₀ alkyl. We find that the presence of some phenyl side groups enhances the heat and wear resistance of the resins. Conversely, lower alkyl groups and in particular methyl group contribute to good toner release properties. Accordingly, in preferred embodiments at least half of the side groups R¹ are selected from phenyl and C₁₋₁₀ alkyl, more preferably from phenyl and C₁₋₄ alkyl. More preferably, at least three-quarters and most preferably all of the side groups R¹ are selected from these groups.

In the most preferred embodiments, the side groups R¹ are essentially all phenyl or methyl groups. If mixed, such groups may be in a number ratio 4:1 to 1:4 to one another.

The weight average molecular weight of the ladder structure polysiloxane resin is preferably from 2,000 to 20,000.

The nature of terminal groups on the ladder-structure polysiloxane is of lesser importance, because they are relatively few.

For a typical end structure 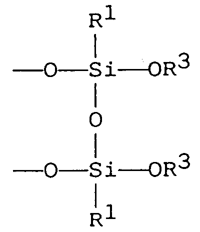
the end groups R³ may typically be H or C₁₋₁₀ alkyl, more usually C₁₋₅ alkyl.

The ladder-structure polysiloxane resin preferably forms an outer layer on a roller substrate. The outer layer may be from 5 to 100µm, more preferably from 5 to 60µm, thick.

The ladder-structure resin may be made by reacting single-chain polysiloxanes carrying hydroxy and/or alkoxy side groups by a condensation reaction, with elimination of water and/or alcohol respectively, to form the -O-bridges between long chains which are characteristic of the ladder structure.

More particularly, such a reaction may be carried out in situ on a roller substrate surface, enabling a process whereby one or more precursor polysiloxanes with repeat units of general formula 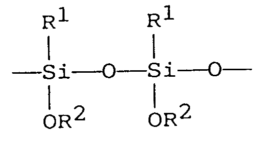
(in which R¹ is as defined previously, and groups R² are selected from H and C₁₋₁₀ alkyl and may vary independently) are applied in solution to a roller substrate and reacted in situ to form a ladder-structure polysiloxane resin. Typically this reaction is promoted by heating the coated roller, with driving off of the solvent.

The precursor polysiloxane solution may be applied to the roller substrate surface by spray or dip coating. These methods are suitable for forming a smooth, uniform layer which preferably needs little or no further machining before it is suitable for use.

In another aspect, the invention provides an image recorder, such as a printer, photocopier or facsimile receiver, in which a heating station for heating a toner image formed on a recording medium comprises a roller having a polysiloxane resin surface as defined above. This roller may be a heating roller, in which case it may have heating means such as a halogen heater inside it. A back-up or support roller, which forms a nip with a heating roller, may also advantageously have the polysiloxane resin surface, particularly when it may contact toner in use e.g. in double-sided copying.

Details of, specific embodiments and preferred features are now given with reference to the accompanying drawings, in which:
Fig. 1 is a schematic cross-section of an electrophotographic image former;
Fig. 2 is a radial cross-section through a heating roller of the apparatus;
Fig. 3 is a radial cross-section through a second embodiment of roller, suitable for a support roller;
Fig. 4 shows one method of coating a roller;
Fig. 5 shows a second method of coating a roller; and
Fig. 6 compares high-temperature decomposition of a coating embodying this invention and a polyimide coating.

The elements of the electrophotographic image-producing apparatus of Fig. 1 have already been described. This apparatus may be part of e.g. a high-speed laser printer, a photocopying machine or a facsimile machine which prints onto individual sheets. Problems of wear and heat effect on the rollers are most acute in high-speed laser printers, since these have the fastest throughput of recording medium.

Fig. 2 shows in section a roller 90 embodying the invention. This embodiment is for use as a heating roller for the heating station of an image recorder. The roller 90 comprises a cylindrical metal tube 92 e.g. of aluminum, enclosing an axially-extending heat source 11 such as a halogen lamp, and having on its outer surface a polysiloxane layer 91 specified in more detail below. The layer thickness is e.g. about 10µm. The aluminum cylinder has conventional dimensions e.g. outer diameter of 100mm, inner diameter of 84mm and axial length 400mm.

The outer layer 91 in this embodiment was made from a polysiloxane resin substantially of the following formula:

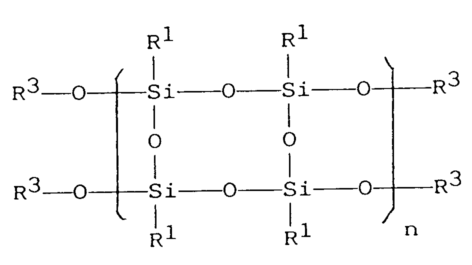

The end groups R³ were hydrogen. The side groups R² were all methyl.

Fig. 3 is a corresponding sectional view of another embodiment of roller. In this case the roller 190 is a support roller, designed for use in opposition to a heated roller of the Fig. 2 type to form a nip between which the recording medium e.g. paper passes to be heated. As in the Fig. 2 roller, the construction is based on a cylindrical metal tube 192 e.g. of aluminum, but in this embodiment the metal tube is surrounded by an elastomeric sleeve 193 e.g. of silicone rubber. A thin release layer 191 is formed on the outer surface of the elastomeric sleeve.

This roller 109 has conventional dimensions e.g. outer diameter 100mm, inner diameter 50mm and length 400mm. A roller of this general type, having an elastomeric outer layer, is commonly used to oppose a heated roller of the Fig. 2 type. The special polysiloxane coating 191 is particularly relevant when the image recorder prints on both sides of the recording medium, since the support roller surface will then be subjected not only to heat and wear resistance requirements comparable to the other roller, but also toner release requirements.

The outer polysiloxane layer 191 may be formed of the same material as in the Fig. 2 embodiment.

In specific embodiments of the invention we used, as starting materials, hydroxypolysiloxanes obtained from Kansai Paint Co., Ltd. under the tradenames CELA 400 and CELA 150 respectively. Each of these materials corresponds to a general repeating unit formula as follows:

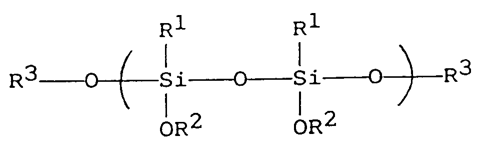

In CELA 400, the terminal groups R³, and R², are hydrogen. Side groups R¹ are all methyl groups. CELA 150 was similar as regards the groups R¹ but the terminal groups R³ and the groups R² were ethyl.

We found that CELA 400 led to a ladder-structure film of weight average molecular weight about 6,000. For CELA 150, a higher value of about 15,000 was observed.

In other embodiments a mixture of methyl and phenyl groups is proposed, e.g. methyl:phenyl being about 2:1.

Each of these starting materials was used to make a toner release layer as follows. First, the starting compound was dissolved in a suitable organic solvent, such as toluene or butyl Cellosolve (Trade Mark). The result was a low-viscosity paint formulation which could easily be coated onto a smooth surface to form a thin, uniform layer.

### COMPARATIVE TESTS

For purposes of comparison, a paint formulation as described above was used to form a release film on a rubber plate of 30 durometer hardness and 5mm thick. After application, the paint was dried in air at 200°C for 20 minutes to give a solid, adherent film.

### Peel Test

The toner release properties of the trial film were assessed by an adhesive tape peeling test, using a PTFE film of known type on a similar rubber plate as a basis for comparison. In the test, an adhesive film (FANTACK film of Kansai Paint Co., Ltd.) 25 cm wide was applied to the sample under a pressure of 2 kg/cm of film and at a rate of 300 mm/min. After 48 hours at 20°C, the film was peeled off at a steady speed of 300 mm/min. The load required for the peeling was measured.

It was found that the release film embodying this invention required a peeling force of only 250g, while the known fluororesin film required a peeling force of 370g. That is to say, the release properties of the embodiment of the invention were even better than those of the known PTFE film, a film known to have good toner release performance.

### Hardness Test

As an index of wear resistance, the hardness of the comparison materials (as described above) was tested by a standard "pencil hardness" test conforming to JIS G0202. The known fluororesin material was so soft that no result was obtainable at all. By contrast, the material embodying the invention showed a hardness of 3H grade, much harder than the known material and indicating a much higher wear resistance in use on a image recorder roller.

### Thermal Decomposition Test

The material embodying the invention, as described above, was compared with a polyimide resin of known type. Polyimide resins have much greater heat resistance than the fluororesins (PTFE) conventionally used as toner release materials. This was therefore a relatively severe comparison.

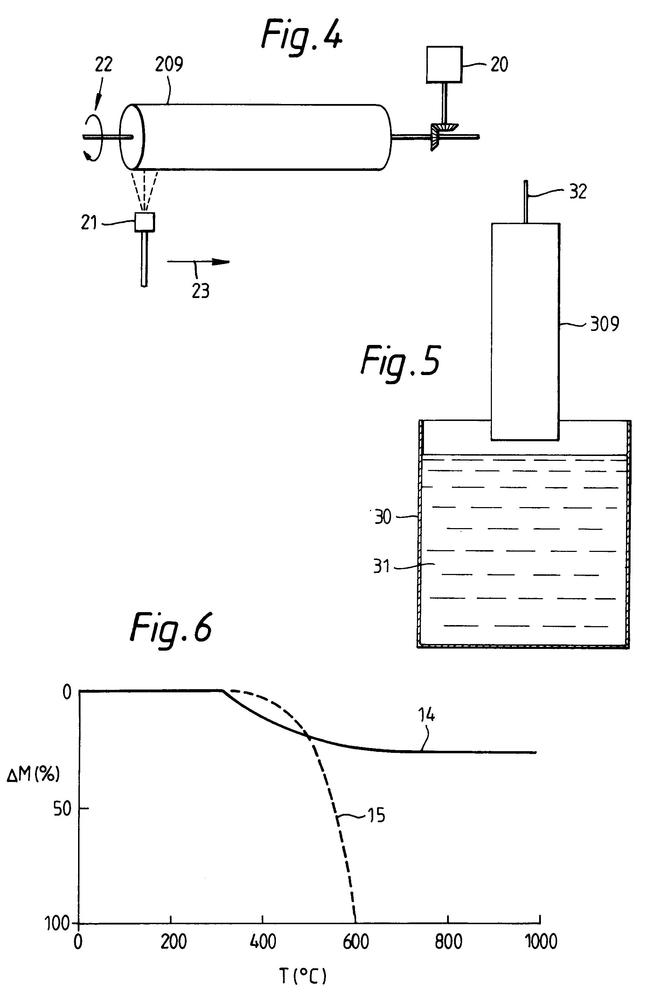

In the tests, the temperature of the sample was raised at a constant rate (5°C/min) in air. The results are shown in Fig. 6, where the vertical axis ΔM is rate reduction due to heating (%) and the horizontal axis T is the temperature in °C. Line 14 indicates the characteristic of the layer embodying the invention, line 15 that of the polyimide resin layer.

The polyimide layer began significant weight loss at about 400°C, and then lost weight very rapidly so that by 600°C it had entirely disappeared.

The layer embodying the invention began to lose some weight at about 300°C, rather earlier than the polyimide layer. After this initial weight loss, however, the layer of the invention lost weight only gradually so that, even above 600°C, the layer was still mostly intact.

It should be explained that thermal weight loss characteristics for a fluororesin (PTFE or PFA, not shown in this Figure) are as follows. Weight loss begins at about 160°C, followed by a relatively steep continuation of weight loss (as for the polyimide) leading to complete disappearance at about 450°C.

In general, the maximum operation temperature of a fluororesin in an image recorder heating station is about 40°C above the temperature at which weight loss begins i.e. about 200°C. Based on that criterion, the operational temperature of the layer embodying the invention is at least about 340°C, representing a considerable advance over the fluororesin prior art in combination with the other good properties of the new coating layer.

### Roller Coating Processes

Processes suitable for making rollers embodying the invention are illustrated with reference to Figs. 4 and 5.

Fig. 4 shows a spray process, in which the roller substrate 209 (e.g. aluminum cylinder, aluminum cylinder with silicone rubber outer layer) is journalled for rotation (as shown by arrow 22) driven by a motor 20. A spray head 21 connected to a supply of solution of the single-chain polysiloxane precursor sprays the surface of the rotating roller substrate 209, and is gradually moved axially along the length of the roller substrate.

With the roller rotating at e.g. 60 rpm, the coating process may take as little as 1 minute.

Fig. 5 illustrates a different coating method whereby the roller substrate 309 is suspended at one end from a wire 32 and lowered gradually into a bath 30 containing the polysiloxane precursor solution 31. By relative control of the insertion rate, hold time in the solution, and withdrawal rate, a substantially uniform coating can be achieved on the substrate surface. Typically this might take 2 or 3 minutes.

After coating, the wet roller is heated to drive off the solvent and bring about a condensation reaction whereby the single chains combine to form the bridged double chain ladder structure desired in the final coating. In the specific examples described, where both chains have side hydroxyl groups, this is by elimination of water. In other embodiments, the chains may have side alkoxy groups which can condense with hydroxy groups of another chain with elimination of an alcohol molecule. The drying time and temperature may be varied according to the exact nature of the substances used. Usually drying in air will be satisfactory. In examples, we found that drying at about 200°C for between 10 and 30 minutes produced satisfactory results.

As will be understood from the above, the present invention provides a new outer surface for a heating station roller in an image recorder. While achieving toner release properties which are comparable with or even better than those of some of the prior art fluororesins, rollers embodying the present invention were found to have much better wear resistance, leading to longer service life and a longer replacement cycle in use. The new materials also demonstrated greater heat resistance than the prior art fluororesins, thereby offering higher operational temperatures and consequent faster operating speeds.

Finally, the nature of the polysiloxane resins used to create the novel roller surfaces was such that they could be applied as a solution of a precursor of the resin and formed in situ, enabling quicker and easier production of finished rollers than with the fluororesins of the prior art.

## Claims

1. A roller (90,109) for a toner heating station of an image recorder, characterised by an outer surface (91,191) formed of polysiloxane resin having a ladder structure with repeating units of the formula 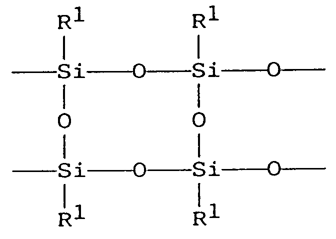 in which groups R¹ are side groups which may be the same as or different from each other.

2. A roller according to claim 1 in which the side groups R¹ are H, phenyl or C₁₋₁₀ alkyl.

3. A roller according to claim 2 in which at least half of the side groups R¹ are selected from phenyl and C₁₋₁₀ alkyl.

4. A roller according to claim 3 in which substantially all of the side groups R¹ are selected from phenyl and C₁₋₁₀ alkyl.

5. A roller according to any one of claims 2, 3 and 4 in which C₁₋₁₀ alkyl is methyl.

6. A roller according to any one of the preceding claims, in which the polysiloxane resin forms a surface layer (91;191) on a roller substrate (92;192,193)

7. A roller according to claim 6 in which the surface layer (91,191) is from 5 to 60 µm thick.

8. A roller according to claim 6 or claim 7 in which the roller substrate (92) has a metal outer surface on which the surface layer (91) is formed.

9. A roller according to claim 6 or claim 7 in which the roller substrate (192,193) has an elastomer outer surface on which the surface layer (191) is formed.
